# EUROPÄISCHE PATENTSCHRIFT

(11) **EP 1 638 347 B1**
(45) Veröffentlichungstag und Bekanntmachung des Hinweises auf die Patenterteilung: **19.03.2008**
(21) Anmeldenummer: 04022108.7
(22) Anmeldetag: 16.09.2004
(51) Int. Cl.: H04Q 3/00

(54) **Durchführung linkset-bezogener SS7-Netzwerkfunktionen basierend auf M3UA-Nachrichten**
Execution of linkset-related SS7 network functions based on M3UA messages
Exécution de fonctions relatives à un ensemble de liens dans un réseau SS7 fondée sur des messages M3UA

(43) Veröffentlichungstag der Anmeldung: 22.03.2006
(73) Patentinhaber: Nokia Siemens Networks GmbH & Co. KG, 81541 München (DE)
(72) Erfinder: Angermayr, Manfred, 86529 Schrobenhausen (DE); Beermann, Martin, 82178 Puchheim (DE)

(56) Entgegenhaltungen:
- WO-A-02/28060
- WO-A-02/076112
- US-A1- 2004 068 534
- SIDEBOTTOM G ET AL: "RFC 3332 Signaling System 7 (SS7) Message Transfer Part 3 (MTP3) - User Adaptation Layer (M3UA)" IETF, September 2002 (2002-09), XP002247869
- "Tutorial: Interworking Switched Circuit and Voice-over-IP networks" PERFORMANCE TECHNOLOGIES, 22. August 2001 (2001-08-22), XP002253253

## Beschreibung

Die vorliegende Erfindung betrifft ein Verfahren und Netzelement zum Liefern von linkset-bezogenen SS7-Netzwerkfunktionen basierend auf M3UA-Nachrichten. Insbesondere liefert die vorliegende Erfindung ein Verfahren und einen Signaling Gateway zum Durchführen des Screening basierend auf M3UA-Nachrichten.

Moderne Kommunikationsnetze transportieren üblicherweise zwei Arten von Verkehr bzw. Daten. Die erste Art ist der Verkehr, welcher von Nutzern oder Teilnehmern gesendet oder empfangen wird und dessen Übertragung häufig dem Nutzer oder Teilnehmer in Rechnung gestellt wird. Dieser Verkehr wird auch als Nutzerverkehr, Nutzerdaten oder Teilnehmerverkehr bezeichnet. Die zweite Art ist jener Verkehr, der durch das Netzwerkmanagement verursacht und häufig als Managementverkehr bezeichnet wird.

Auf dem Gebiet der Telekommunikation wird der Managementverkehr auch als Signalisierungsverkehr bezeichnet. Dabei bezieht sich der Begriff "Signalisierung" auf den Austausch von Signalisierungsnachrichten zwischen verschiedenen Netzelementen wie Datenbankservern, Ortsvermittlungsstellen, Transitvermittlungsstellen und Nutzerendgeräten. Ein weitläufig bekanntes Protokoll zum Übertragen solcher Signalisierungsinformationen ist das Signaling System 7 (SS7), häufig auch als Zentrales Zeichengabesystem Nr. 7 (ZZS7) oder Common Channel Signaling System 7 (CCS7) bezeichnet.

Das Signaling System 7 ist durch die International Telecommunication Union (ITU) in der Standardserie Q.7xx standardisiert und erfüllt alle Signalisierungsanforderungen heutiger Telekommunikationsnetze.

Das Signaling System 7 bildet dabei ein unabhängiges Netzwerk, in welchem SS7-Nachrichten zwischen den Netzelementen über bidirektionale Kanäle ausgetauscht werden, welche als Links bezeichnet werden. Die Signalisierung erfolgt außerhalb des (Sprach)-Bandes (out-of-band) und nicht innerhalb des Bandes (in-band) auf Kanälen, die den Nutzerdaten (z.B. Sprache) vorbehalten sind. Dies ermöglicht neben schnelleren Verbindungsaufbauzeiten eine Reihe von Funktionen, beispielsweise Intelligent Network (IN) Dienste, die im Signalisierungsnetz ablaufen können, ohne daß parallele Nutzdatenverbindungen aufgebaut werden müssen.

Die Elemente eines SS7-Netzwerks sind als Signaling Points bekannt, die durch einen Signaling Point Code (SPC) eindeutig identifiziert werden. Diese Point Codes werden in den Signalisierungsnachrichten zwischen Signaling Points übertragen und bezeichnen jeweils die Quelle und das Ziel einer Nachricht. Jeder Signaling Point nutzt eine Routingtabelle zum Auswahl eines geeigneten Signalisierungswegs für jede Nachricht.

Es werden 3 Typen von Signaling Points in SS7 Netzwerken underschieden: Service Switching Points (SSPs), Signaling Transfer Points (STPs) und Service Control Points (SCPs).

SSPs sind Vermittlungsstellen, von denen Verbindungen ausgehen, bei denen Verbindungen enden oder die als Durchgangsvermittlungsstellen (häufig als sog. Tandems) Verbindungen weiterreichen. Ein SSP sendet Signalisierungsnachrichten an andere SSPs zum Aufbau, Managen und Abbau von (Sprach)Kreisen, die für eine Verbindung benötigt werden. Ein SSP ist außerdem in der Lage, Anfragen an zentralisierte Datenbanken (SCPs) zu stellen, um zu bestimmen, wie eine Verbindung zu routen ist (beispielsweise bei gebührenfreien Verbindungen). Ein SCP sendet eine Antwort an den anfragenden SSP, welche die sogenannte Routing Number enthält, die mit der gewählten Nummer assoziiert ist.

Netzwerkverkehr zwischen Signaling Points kann über Signaling Transfer Points (STPs) geleitet werden. Ein STP leitet jede eingehende Nachricht basierend auf der in der SS7-Nachricht enthaltenen Routing-Information an einen ausgehenden Signalisierungslink weiter. Da ein STP als zentraler Netzknoten a-giert, liefert er eine verbesserte Ausnutzung des SS7-Netzwerks, indem er das Erfordernis direkter Links zwischen Signaling Points beseitigt. Ein STP kann die sogenannte Global Title Translation ausführen, eine Prozedur, durch welche das Ziel aus den Nummer-Digits ermittelt wird, die in der Signalisierungsnachricht enthalten sind (z.B. die gerufene gebührenfreie Nummer, die Nummer einer Calling Card oder die ID eines Mobiltelefonnutzers MSIN).

Das Signaling System 7 nutzt einen Protokollstack, in welchem die Hardware- und Softwarefunktionen des SS7-Protokolls in funktionale Abstraktionen unterteilt werden, die Level bzw. Ebenen genannt werden. Diese Level lassen sich mit einigen Einschränkungen auf das Open Systems Interconnect (OSI) 7-Layer-Modell bzw. Schichtenmodell der International Standards Organization (ISO) abbilden.

Die unteren drei Level werden Message Transfer Part (MTP) genannt. MTP Level 1 definiert die physikalischen, elektrischen und funktionalen Eigenschaften des digitalen Signaling Link. MTP Level 2 sichert die korrekte Ende-zu-Ende-Übertragung einer Nachricht über einen Signaling Link. MTP Level 3 liefert das Routing von Nachrichten zwischen Signaling Points des SS7-Netzes.

Funktionen werden bei SS7 durch sogenannte User Parts bereitgestellt. Ein häufig genutzter User Part ist der ISDN User Part (ISUP), welcher das Protokoll definiert, das zum Belegen, Verwalten und Freigeben von Leitungen genutzt werden, welche den Nutzerverkehr zwischen Vermittlungsstellen transportieren (z.B. zwischen dem Anrufer und dem Angerufenen). In einigen Ländern wird der weniger leistungsfähige Telephone User Part (TUP) anstelle des ISUP genutzt.

Ein weiteres SS7-Protokoll, der Signaling Connection Control Part (SCCP), liefert verbindungslose und verbindungsorientierte Netzwerkdienste und die Global Title Translation (GTT) oberhalb des MTP Level 3. Der SCCP wird als Transportebene für TCAP-basierte Dienste verwendet.

Der Transaction Capabilities Applications Part (TCAP) unterstützt den Austausch nicht-sprachkreisbezogener Daten zwischen Applikationen im SS7-Netzwerk unter Verwendung des verbindungslosen SCCP. Anfragen und Antworten, die zwischen SSPs und SCPs ausgetauscht werden, werden in TCAP-Nachrichten transportiert. In Mobilkommunikationsnetzen transportiert der TCAP Nachrichten des Mobile Application Part (MAP), die zwischen Mobilvermittlungsstellen und Datenbanken ausgetauscht werden, um die Nutzerauthentifizierung, die Geräteidentifikation und das Roaming der Teilnehmer zu unterstützen.

Alle User Parts nutzen in klassischen Telekommunikationsnetzen den MTP Level 3 zum Nachrichtentransport, wobei sich der MTP Level 3 seinerseits auf die Level 2 und 1 stützt, um den Transport zu leisten sowie das Linkmanagement durchzuführen.

Aktuelle Entwicklungen zielen darauf ab, die auf exklusiven und daher teuren Leitungen basierende Signalisierung durch Dienste, die auf dem Internet Protocol (IP) basieren, zu ersetzen. Wenn jedoch IP an die Stelle des MTP Level 1 tritt, erfordert dies auch einen Austausch des bislang verwendeten MTP Level 2. Von der Internet Engineering Task Force (IETF), wurde daher im RFC 3332 das Protokoll MTP3 User Adaptation Layer (M3UA) spezifiziert, welches auf dem Stream Control Transmission Protocol (SCTP) aufsetzt und an die Stelle der MTP Level 2 und 3 tritt.

Ziel der Kombination M3UA/SCTP/IP ist es, eine Möglichkeit zu schaffen, welche - analog dem MTP Level 3 der klassischen SS7-Netze - Nachrichten der User Parts zwischen SS7 Signaling Gateways (SG), Media Gateway Controllern (MGC) oder IP-basierten Datenbanken zu transportieren.

Problematischerweise unterstützt die Protokollarchitektur des M3UA nicht die vom klassischen MTP Level 3 bekannten Linksets. Dies führt unter anderem dazu, daß das sogenannte Screening von Level 3 Message Signaling Units (MSUs) nicht angewendet werden kann. Screening wird jedoch aufgrund des Umstands, daß mittels übergreifendem SS7-Netzwerk die Netze vieler Telekommunikationsanbieter gekoppelt werden, in immer stärkerem Maß benötigt, damit ein Netzbetreiber verhindern kann, daß seine Ressourcen unbefugt durch andere Netzbetreiber genutzt werden. Hierzu werden zumeist in STPs die eingehenden MTP Level 3 MSUs untersucht und anhand von Screening-Regeln an ihr Ziel weitergeleitet oder verworfen. Ein bekannter und häufig genutzter Screening-Standard ist in STP Generic Requirements, GR-82-CORE, Anhang C von Telcordia Technologies (auch "Bellcore Screening" genannt) festgeschrieben.

Aus der US 2004/0068534 A1 bzw. der WO 02/054785 ist ein System zur Übertragung von Signalisierungen zwischen unterschiedlichen Netzen bekannt. Mindestens zwei Signalisierungs-Gateways werden unter Verwendung eines Punkt-zu-Punkt Protokolls zur symmetrischen und quasi-assoziierten Signalisierung miteinander verbunden. Dabei wird eine M3UA-Verbindung zu einem Nachbarknoten als IP-Linkset betrachtet. Bei einer Routenbeschreibung zu einem Ziel wird dann nicht nur ein CCS7-Linkset zur Spezifizierung des *abgehenden* Weges verwendet, sondern auch ein IP-Linkset.

Außerdem wird auf einen MTP-Signalisierungs-Endpunkt und einen M3UA-Signalisierungs-Endpunkt Bezug genommen.

Eine Aufgabe der vorliegenden Erfindung besteht daher darin, ein Verfahren und ein Netzwerkelement anzugeben, welche die Durchführung linkset-bezogener SS7-Netzwerkfunktionen, insbesondere Screening, basierend auf M3UA-Nachrichten ermöglichen.

Diese Aufgabe wird gelöst durch ein Verfahren zur Durchführung linkset-bezogener SS7-Netzwerkfunktionen basierend auf Nachrichten gemäß des M3UA, mit folgenden Schritten: in einer Einrichtungsphase, Abbilden von M3UA-Verbindungen auf Pseudo-Linksets, wobei ein Pseudo-Linkset definiert ist als die Menge der M3UA-Verbindungen zwischen einem Signaling Gateway und einem Application Server und durch ein Set von SS7-Parametern und Parameterwerten eindeutig bestimmt ist, wobei die Parameter und Parameter werte den Umfang des durch den Application Server bearbeiteten Verkehrs eindeutig festlegen;
- in der Einrichtungsphase, Ablegen der die Pseudo-Linksets beschreibenden Daten als Linkset-Daten in einer Datenbank; und
- in einer Betriebsphase, Durchführen der linkset-bezogenen SS7-Netzwerkfunktionen durch Ermitteln eines zugeordneten Pseudo-Linksets und Anwenden der SS7-Netzwerkfunktionen auf die Nachrichten der anhand der Datenbank ermittelten M3UA-Verbindung,
wobei eine der linkset-bezogenen SS7-Netzwerkfunktionen ein Pseudo-Linkset bestimmt, auf dem eine der Nachrichten empfangen wurde.

Die Erfindung betrifft ferner einen Signaling Gateway mit Mitteln zur Ausführung dieses Verfahrens.

Vorteilhafte Ausgestaltungen sind in den abhängigen Ansprüchen angegeben.

Ein Vorteil der Erfindung ist darin zu sehen, daß durch die Erfindung Funktionen, welche die klassischen SS7-Linksets voraussetzen, beispielsweise das Screening auf MTP-Ebene bzw. M3UA-Ebene, nunmehr auch in SS7-Netzen, die auf M3UA basieren, durchgeführt werden können.

Wird in einem bestehenden, klassischen SS7-Netz ein TDM-basierter STP im Wege des Umrüstens auf SS7 over IP mittels M3UA ersetzt durch einen Signaling Gateway, kann vorteilhaft die existierende Datenbank der bislang verwendeten Screening-Regeln weiterverwendet werden, da die M3UA-Verbindungen erfindungsgemäß als Linksets abgebildet werden.

Im folgenden werden bevorzugte Ausführungsbeispiele der vorliegenden Erfindung im Zusammenhang mit einer Zeichnung näher erläutert. Dabei werden Begriffe, die im Zusammenhang mit M3UA stehen, sofern nicht anders angegeben, in Übereinstimmung mit den in RFC 3332 definierten Bedeutungen verwendet (siehe Kapitel 1.2 des RFC 3332).

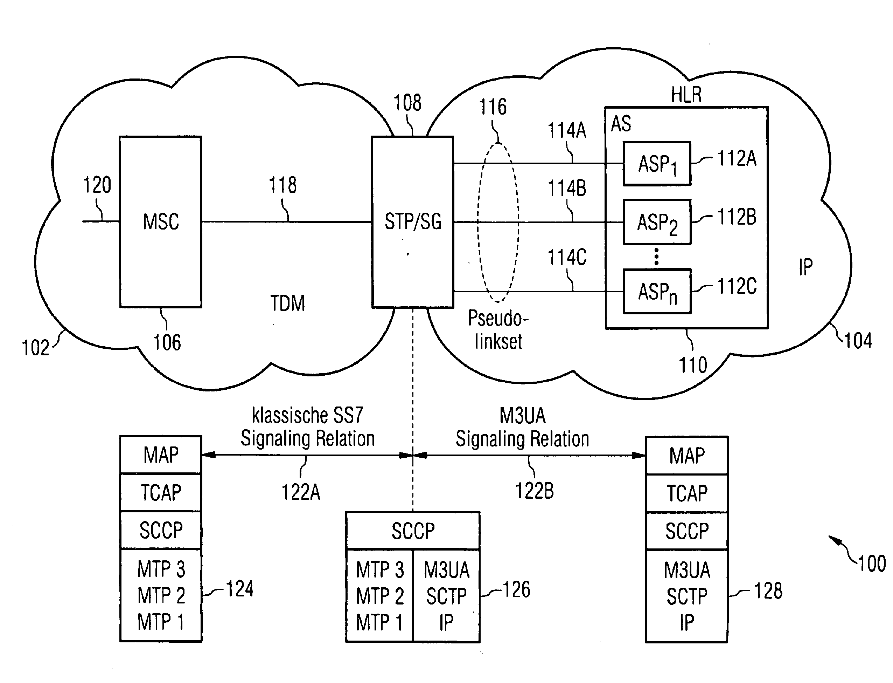

Die einzige Figur zeigt ein Netzwerk 100, welches aus einem klassischen Telekommunikationsnetzwerk, nämlich dem TDM-Netzwerk 102 und einem IP-basierten Telekommunikationsnetzwerk 104 zusammengesetzt ist.

Am Übergang zwischen den Netzen 102 und 104 ist ein erfindungsgemäßer Signaling Gateway 108 angeordnet, der in diesem Beispiel sowohl die Funktion eines Signaling Transfer Point als auch die eines Signaling Gateway (STP/SG) hat. Mit dem Signaling Gateway 108 ist im TDM-Netz 102 mittels eines Signalisierungslink 118 beispielsweise ein Mobile Switching Center (MSC) 106 verbunden, welches mittels Signalisierungslink 120 mit weiteren Netzelementen, etwa einem Base Station Controller (BSC) - nicht dargestellt - verbunden ist. Im IP-Netz 104 ist der Signaling Gateway 108 mittels dreier M3UA-Verbindungen 114A-C mit einem Application Server (AS) 110 verbunden, im vorliegenden Beispiel ein Home Location Register (HLR), wobei der Application Server 110 beispielhaft drei Application Server Processes (ASP₁, ASP₂, ASPₙ) 112A-C umfaßt. Boxen 124, 126 und 128 zeigen für MSC 106, STP/SG 108 und AS 110 die jeweils für die Nachrichtenübertragung genutzte Protokollhierarchie. Insbesondere zeigt Box 126 die Signaling Gateway Funktion des STP/SG 108, nämlich die Umsetzung von MTP Level 1-3 auf M3UA/SCTP/IP.

Um für Nachrichten aus dem IP-Netz 104, die über die M3UA Signaling Relation 122B in Richtung des TDM-Netzes 102 gesendet und dort mittels klassischer SS7 Signaling Relation 122A weitervermittelt werden, ein Screening vornehmen zu können, werden die M3UA-Verbindungen 114A-C auf ein Pseudo-Linkset oder IP-Linkset 116 abgebildet. Während im klassischen SS7 ein Linkset definiert ist durch die Menge aller SS7-Links, die ein Netzelement direkt mit einen bestimmten, unmittelbar benachbarten Netzelement verbinden und ein klassisches Linkset damit eindeutig definiert ist durch den eigenen Point Code und den Point Code des unmittelbaren Nachbarn (Adjacent Destination Point Code, ADPC), wird das Pseudo-Linkset oder IP-Linkset 116 definiert als Menge aller M3UA-Verbindungen 114A-C zwischen dem Signaling Gateway 108 und dem Application Server 110.

Ein Pseudo-Linkset oder IP-Linkset 116 ist damit eindeutig definiert durch den Point Code des Signaling Gateway 108 und den Routing Key des Application Server 110. Der Routing Key beschreibt einen Satz von SS7-Parametern und Parameterwerten, die den Umfang des durch den Application Server 110 bearbeiteten Verkehrs eindeutig festlegen. Der Routing Key kann ein jeweils einen Bereich oder einen Einzelwert aller oder eines der folgenden SS7-Parameter umfassen: Service Information O-cet (SIO), Destination Point Code (DPC), Origination Point Code (OPC), Circuit Identification Code (CIC). Der Routing Key, d.h. der Satz von Parametern und Parameterwerten, werden durch einen numerischen Wert namens Routing Context eindeutig repräsentiert.

Die so definierten Pseudo-Linksets oder IP-Linksets werden - wie auch SS7-Linksets - in Datenbanken des Signaling Gateway 108 abgelegt und können daher genauso wie SS7-Linksets als Einstiegspunkt für linksetbasierte Funktionen wie z.B. Screening genutzt werden. Vorteilhaft für den Netzbetreiber können dabei nach dem Umstieg auf SS7 over IP mit M3UA dieselben linksetbezogenen Regeln, z.B. Screening Regeln, verwendet werden wie zuvor in einer reinen TDM Umgebung.

Zum Screening werden, ausgehend von einem Linkset, über welches eine Nachricht empfangen wurde, ein einer Abfolge von sogenannten Screening-Steps bestimmte Parameter der Nachricht überprüft (z.B. OPC, DPC, SIO, Affected Destination bzw. Affected Point Code). Dabei wird anhand der überprüften Parameter letztlich ermittelt, ob die betreffende Nachricht gemäß der Routing-Regeln weiterzuleiten oder als unzulässig zu verwerfen ist.

Ein Screening läuft wie folgt ab: Zunächst wird das IP-Linkset 116 bestimmt, auf dem die zu screenende Nachricht empfangen wurde. Bei herkömmlichen SS7-Linksets kann das Linkset eindeutig bestimmt werden, indem überprüft wird, auf welchem SS7-Link die Nachricht empfangen wurde, da die Zuordnung eines Links zu genau einem Linkset eindeutig ist. Bei M3UA kann ein Application Server Process 112 jedoch für mehrere Application Server zuständig sein - nicht dargestellt. Dies bedeutet jedoch, daß ein von einem ASP 112A gesendete Nachricht über ein erstes Pseudo-Linkset gesendet wird, wenn dieser ASP 112A im Kontext eines ersten Application Server arbeitet und über ein zweites Pseudo-Linkset gesendet wird, wenn der gleiche ASP 112A im Kontext eines zweiten Application Server arbeitet. In beiden Fällen erreicht die Nachricht den STP/SG 108 jedoch über die gleiche M3UA-Verbindung, so daß anhand der M3UA-Verbindung kein Screening durchgeführt werden kann, sondern nur anhand der hier definierten Pseudo-Linksets.

Welchem Application Server - und damit welchem Pseudo-Linkset - die Nachricht zugeordnet ist, kann durch Anwendung der obenstehenden Definition für die Pseudo-Linksets aus dem Parameter Routing Context (RC) ermittelt werden. Ist ein ASP nur für genau einen AS zuständig, kann diese Zuordnung auch ohne den RC Parameter vorgenommen werden.

Für User Part Nachrichten (z.B. ISUP oder SCCP) können die zu screenenden Parameter direkt aus den M3UA Protocol Data Parametern einer M3UA Datennachricht gelesen werden. Dies betrifft Parameter wie Origination Point Code (OPC), Destination Point Code (DPC), Service Indicator (SI), Network Indicator (NI) oder Signaling Link Selection (SLS). Andere Parameter, beispielsweise ISUP Message Type, können aus dem User Protocol Data Feld der M3UA Nachricht ermittelt werden.

SS7-Management-Nachrichten müssen zunächst als solche erkannt werden. SS7-Management-Nachrichten sind nicht immer am Service Indicator (SI) zu erkennen, da die M3UA Management Nachrichten diesen nicht enthalten. Um Nachrichten mit SI = 0 (MTP Management) zu screenen, kann der Screening Prozess vorzugsweise an der M3UA Message Class erkennen, daß es sich um eine SS7-Management-Nachricht handelt. Die Message Class für SS7 Management Nachrichten ist beim M3UA als "2" festgelegt. Da es sich bei M3UA-Verbindungen um Punkt-zu-Punkt-Verbindungen handelt, haben diese SS7 Signaling Network Management (SSNM) Nachrichten weder einen DPC noch einen OPC. Sollen diese Parameter dem Screening unterworfen werden, ist es nicht möglich, diese aus der Nachricht auszulesen. Vielmehr können DPC und OPC vorzugsweise aus den Eigenschaften des Pseudo-Linksets anhand der in der Datenbank hinterlegten Daten des Pseudo-Linksets abgeleitet werden.

Während für klassische SS7-Nachrichten ein Screening anhand des sogenannten Affected Point Codes (der Point Code bzw. das Netzelement, welches von der Nachricht betroffen ist) ohne weiteres möglich ist, da klassische SS7-Nachrichten jeweils maximal einen Affected Point Code aufweisen, können M3UA-Nachrichten sich auf mehrere Affected Point Codes gleichzeitig beziehen. Als Beispiel sei die in RFC 3332 definierte Nachricht DUNA (Destination Unavailable) betrachtet, die einer TFP-Nachricht (Transfer Prohibited) oder einer TCP-Nachricht (Transfer Cluster Prohibited) des MTP Level 3 entspricht, und die sich auf 1..n Affected Point Codes beziehen kann:

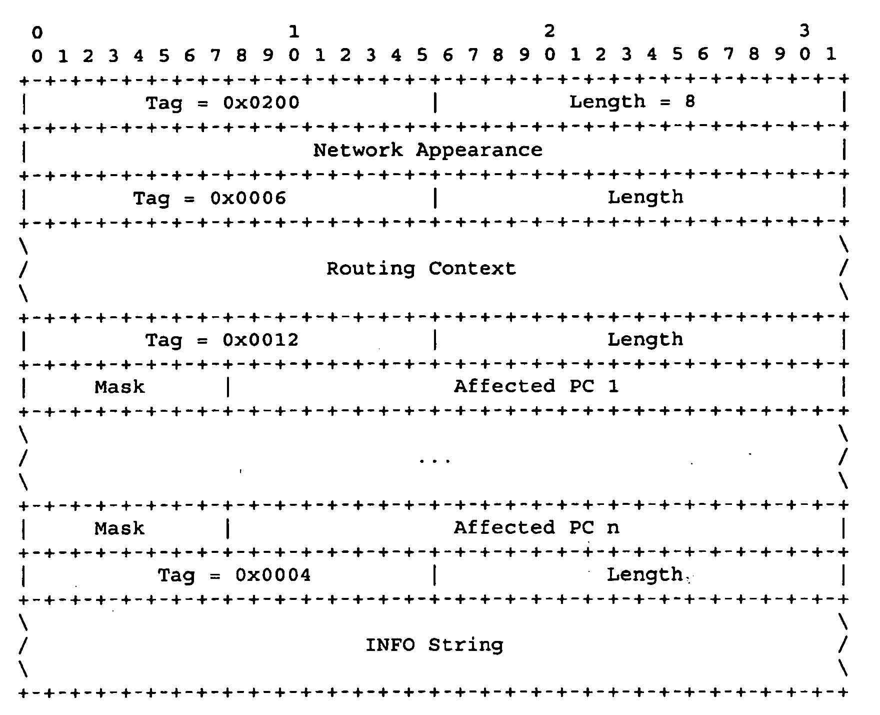

Falls Screening Regeln für Affected Point Codes definiert sind, kann für die M3UA-Nachricht nicht festgestellt werden, wie mit der Nachricht zu verfahren ist, denn für die gleiche Nachricht wären möglicherweise mehrere Regeln gleichermaßen zutreffend, die unter Umständen auch gegensätzliche Ergebnisse liefern. Um dennoch M3UA-Nachrichten mit mehreren Affected Point Codes zu screenen, können die Nachrichten in Einzelnachrichten mit jeweils nur einem Affected Point Code zerlegt werden. Alternativ kann auch eine Zerlegung in Nachrichten erfolgen, die jeweils eine Gruppe von Affected Point Codes umfassen, für welche dieselben Screening Beschränkungen gelten.

Obgleich die Erfindung vorstehend mit Bezug auf die linksetbezogene Funktion "Screening" beschrieben wurde, ist die Erfindung nicht auf diese Anwendung beschränkt. Vielmehr kann die Erfindung vorteilhaft für alle linkset-bezogenen Netzwerkfunktionen angewendet werden.

## Patentansprüche

1. Verfahren zur Durchführung linkset-bezogener SS7-Netzwerkfunktionen basierend auf Nachrichten gemäß des M3UA MTP3 User Adaptation Layer, mit folgenden Schritten:
- in einer Einrichtungsphase, Abbilden von M3UA-Verbindungen auf Pseudo-Linksets (116), wobei ein Pseudo-Linkset (116) definiert ist als die Menge der M3UA-Verbindungen (114) zwischen einem Signaling Gateway (108) und einem Application Server (110) und durch ein Set von SS7-Parametern und Parameterwerten eindeutig bestimmt ist, wobei die Parameter und Parameterwerte den Umfang des durch den Application Server (110) bearbeiteten Verkehrs eindeutig festlegen;
- in der Einrichtungsphase, Ablegen der die Pseudo-Linksets beschreibenden Daten als Linkset-Daten in einer Datenbank; und
- in einer Betriebsphase, Durchführen der linkset-bezogenen SS7-Netzwerkfunktionen durch Ermitteln eines zugeordneten Pseudo-Linksets (116) und Anwenden der SS7-Netzwerkfunktionen auf die Nachrichten der anhand mittels der Datenbank ermittelten M3UA-Verbindung,
**dadurch gekennzeichnet, dass** eine der linkset-bezogenen SS7-Netzwerkfunktionen ein Pseudo-Linkset bestimmt, auf dem eine der Nachrichten empfangen wurde.

2. Verfahren nach Anspruch 1 zur Durchführung der linksetbezogenen SS7-Netzwerkfunktion Nachrichten-Screening, demgemäß
- für User Part Nachrichten die Screening-Parameter Origination Point Code OPC, Destination Point Code DPC, Service Indicator SI, Network Indicator NI oder Signaling Link Selection SLS dem M3UA Protocol Data Parameter einer M3UA-Nachricht entnommen werden und alle anderen Screening-Parameter dem User Protocol Data Feld der M3UA-Nachricht entnommen werden;
- für SS7-Management-Nachrichten die Erkennung anhand der M3UA Message Class erfolgt und die Screening Parameter Origination Point Code OPC oder Destination Point Code DPC anhand der in der Datenbank hinterlegten Daten des Pseudo-Linksets ermittelt werden.

3. Verfahren nach Anspruch 2 zur Durchführung der linksetbezogenen SS7-Netzwerkfunktion Nachrichten-Screening, **dadurch gekennzeichnet, daß**, falls das Screening der Nachrichten anhand des Affected Point Codes erfolgt, eine M3UA-Nachricht, die mehrere Affected Point Codes enthält, zunächst in einzelne M3UA-Nachrichten separiert wird, die jeweils nur diejenigen Affected Point Codes enthalten, die einer gleichen Screening-Regel unterliegen.

4. Signaling Gateway (108) geeignet zur Durchführung linkset-bezogener SS7-Netzwerkfunktionen basierend auf Nachrichten gemäß des M3UA, MTP3 User Adaptation Layer, der folgendes aufweist:
- Mittel zum Abbilden von M3UA-Verbindungen (114) auf Pseudo-Linksets (116) in einer Einrichtungsphase des Signaling Gateway (108), wobei ein Pseudo-Linkset (116) definiert ist als die Menge der M3UA-Verbindungen (114) zwischen einem Signaling Gateway (108) und einem Application Server (110) und durch ein Set von SS7-Parametern und Parameterwerten eindeutig bestimmt ist, wobei die Parameter und Parameterwerte den Umfang des durch den Application Server (110) bearbeiteten Verkehrs eindeutig festlegen;
- Datenbankmittel zum Speichern der die Pseudo-Linksets beschreibenden Daten als Linkset-Daten; und
- Mittel zum Durchführen der linkset-bezogenen SS7-Netzwerkfunktionen durch Ermitteln eines zugeordneten Pseudo-Linksets (116) und Anwenden der SS7-Netzwerkfunktionen auf die Nachrichten der anhand mittels der Datenbank ermittelten M3UA-Verbindung,
**dadurch gekennzeichnet, dass** eine der linkset-bezogenen SS7-Netzwerkfunktionen ein Pseudo-Linkset bestimmt, auf dem eine der Nachrichten empfangen wurde.

5. Signaling Gateway (108) nach Anspruch 4, geeignet zur Durchführung der linkset-bezogenen SS7-Netzwerkfunktion Nachrichten-Screening, der ferner folgendes aufweist:
- für das Screening von User Part Nachrichten Mittel zum Ermitteln der Screening-Parameter Origination Point Code OPC, Destination Point Code DPC, Service Indicator SI, Network Indicator NI oder Signaling Link Selection SLS aus dem M3UA Protocol Data Parameter einer M3UA-Nachricht und aller anderen Screening-Parameter aus dem User Protocol Data Feld der M3UA-Nachricht;
- für das Screening von SS7-Management-Nachrichten Mittel zum erkennen der SS7-Management-Nachrichten anhand der M3UA Message Class sowie Mittel zum Ermitteln der Screening Parameter Origination Point Code OPC oder Destination Point Code DPC anhand der in der Datenbank hinterlegten Daten des Pseudo-Linksets.

6. Signaling Gateway (108) nach Anspruch 5, geeignet zur Durchführung der linkset-bezogenen SS7-Netzwerkfunktion Nachrichten-Screening, **gekennzeichnet durch** Mittel zum Durchführen des Screening der Nachrichten anhand des Affected Point Codes, wobei diese Mittel Mittel umfassen zum Separieren einer M3UA-Nachricht, die mehrere Affected Point Codes enthält, in einzelne M3UA-Nachrichten, die jeweils nur diejenigen Affected Point Codes enthalten, die einer gleichen Screening-Regel unterliegen.

## Claims

1. Method for executing linkset-related SS7-network functions based on messages according to the M3UA, MTP3 User Adaptation Layer, comprising the following steps:
- in a setting-up phase, mapping M3UA connections onto pseudo linksets (116), a pseudo linkset (116) being defined as the set of M3UA connections (114) between a signalling gateway (108) and an application server (110) and being unambiguously determined by a set of SS7 parameters and parameter values, wherein the parameters and parameter values unambiguously specify the volume of the traffic processed by the application server (110);
- in the setting-up phase, depositing the data describing the pseudo linksets as linkset data in a database; and
- in an operating phase, executing the linkset-related SS7 network functions by determining an associated pseudo linkset (116) and applying the SS7 network functions to the messages of the M3UA connection determined by means of the database,
**characterized in that** one of the linkset-related SS7 network functions determines a pseudo linkset on which one of the messages has been received.

2. Method according to Claim 1 for executing the linkset-related SS7 network function of message screening, in accordance with which:
- for User Part messages, the screening parameters of Origination Point Code OPC, Destination Point Code DPC, Service Indicator SI, Network Indicator NI or Signalling Link Selection SLS are taken from the M3UA protocol data parameter of an M3UA message and all other screening parameters are taken from the User Protocol Data field of the M3UA message;
- for SS7 management messages, recognition is effected by means of the M3UA Message Class and the screening parameters of Origination Point Code OPC or Destination Point Code DPC are determined by means of the data of the pseudo linkset deposited in the database.

3. Method according to Claim 2 for executing the linkset-related SS7 network function of message screening, **characterized in that**, if the messages are screened by means of the Affected Point Code, an M3UA message which contains a number of Affected Point Codes is first separated into individual M3UA messages which in each case only contain the Affected Point Codes which are subject to an identical screening rule.

4. Signalling gateway (108) suitable for executing linkset-related SS7 network functions based on messages according to the M3UA, MTP3 User Adaptation Layer, which has the following:
- means for mapping M3UA connections (114) onto pseudo linksets (116) in a setting-up phase of the signalling gateway (108), wherein a pseudo linkset (116) is defined as a set of M3UA connections (114) between a signalling gateway (108) and an application server (110) and is unambiguously determined by a set of SS7 parameters and parameter values, the parameters and parameter values unambiguously defining the volume of the traffic processed by the application server (110);
- database means for storing as linkset data the data describing the pseudo linksets; and
- means for executing the linkset-related SS7 network functions by determining an associated pseudo linkset (116) and applying the SS7 network functions to the messages of the M3UA connection determined by means of the database,
**characterized in that** one of the linkset-related SS7 network functions determines a pseudo linkset on which one of the messages was received.

5. Signalling gateway (108) according to Claim 4, suitable for executing the linkset-related SS7 network function of message screening, which also has the following:
- for the screening of User Part messages, means for determining the Screening Parameter Origination Point Code OPC, Destination Point Code DPC, Service Indicator SI, Network Indicator NI or Signalling Link Selection SLS from the M3UA Protocol Data parameter of an M3UA message and all other screening parameters from the User Protocol Data Field of the M3UA message;
- for the screening of SS7 management messages, means for recognizing the SS7 management messages by means of the M3UA Message Class and means for determining the Screening Parameter Origination Point Code OPC or Destination Point Code DPC by means of the data of the pseudo linkset deposited in the database.

6. Signalling gateway (108) according to Claim 5, suitable for executing the linkset-related SS7 network function of message screening, **characterized by** means for executing the screening of the messages by means of the Affected Point Code, these means comprising means for separating an M3UA message, which contains a number of Affected Point Codes, into individual M3UA messages which in each case only contain the Affected Point Codes which are subject to an identical screening rule.

## Revendications

1. Procédé pour exécuter des fonctions de réseau SS7 relatives à un ensemble de liens sur la base de messages selon le M3UA, MTP3 User Adaptation Layer, comprenant les étapes suivantes:
- dans une phase d'aménagement, application de liaisons M3UA sur des ensembles de pseudo-liens (116), un ensemble de pseudo-liens (116) étant défini comme étant l'ensemble des liaisons M3UA (114) entre une passerelle de signalisation (108) et un serveur d'application (110) et étant défini univoquement par un ensemble de paramètres SS7 et de valeurs paramétriques, les paramètres et valeurs paramétriques déterminant univoquement le volume du trafic traité par le serveur d'application (110),
- dans la phase d'aménagement, dépôt des données décrivant des ensembles de pseudo-liens en tant que données d'ensembles de liens dans une base de données et
- dans une phase de service, exécution des fonctions de réseau SS7 relatives à un ensemble de liens par détermination d'un ensemble de pseudo-liens (116) associé et application des fonctions de réseau SS7 sur les messages de la liaison M3UA déterminée à l'aide de la base de données,
**caractérisé en ce que** l'une des fonctions de réseau SS7 relatives à l'ensemble de liens définit un ensemble de pseudo-liens sur lequel l'un des messages a été reçu.

2. Procédé selon la revendication 1 pour l'exécution de la fonction de filtrage de message de réseau SS7 relative à un ensemble de liens, selon lequel
- pour des messages du sous-système utilisateur, les paramètres de filtrage «Origination Point Code» OPC, «Destination Point Code» DPC, «Service Indicator» SI, «Network Indicator» NI ou «Signalling Link Selection» SLS sont tirés du paramètre «M3UA Protocol Data» d'un message M3UA et tous les autres paramètres de filtrage sont tirés du champ «User Protocol Data» du message M3UA;
- pour des messages de gestion SS7, la reconnaissance se fait à l'aide de la classe de messages M3UA et les paramètres de filtrage «Origination Point Code» OPC ou «Destination Point Code» DPC sont déterminés à l'aide des données de l'ensemble de pseudo-liens déposées dans la base de données.

3. Procédé selon la revendication 2 pour l'exécution de la fonction de filtrage de messages de réseau SS7 relative à un ensemble de liens, **caractérisé en ce que**, si le filtrage des messages se fait à l'aide de l'«Affected Point Code», un message M3UA qui contient plusieurs «Affected Point Codes» est tout d'abord séparé en messages M3UA distincts qui contiennent chacun uniquement les «Affected Point Codes» qui sont régis par une même règle de filtrage.

4. Passerelle de signalisation (108) convenant pour exécuter des fonctions de réseau SS7 relatives à un ensemble de liens sur la base de messages selon le M3UA, MTP3 User Adaptation Layer, comprenant les éléments suivants:
- des moyens pour appliquer des liaisons M3UA (114) sur des ensembles de pseudo-liens (116) dans une phase d'aménagement de la passerelle de signalisation (108), un ensemble de pseudo-liens (116) étant défini comme étant l'ensemble des liaisons M3UA (114) entre une passerelle de signalisation (108) et un serveur d'application (110) et étant défini univoquement par un ensemble de paramètres SS7 et de valeurs paramétriques, les paramètres et valeurs paramétriques déterminant univoquement le volume du trafic traité par le serveur d'application (110),
- des moyens de base de données pour stocker en tant que données d'ensemble de liens les données qui décrivent des ensembles de pseudo-liens et
- des moyens pour exécuter les fonctions de réseau SS7 relatives à un ensemble de liens par détermination d'un ensemble de pseudo-liens (116) associé et application des fonctions de réseau SS7 sur les messages de la liaison M3UA déterminée à l'aide de la base de données,
**caractérisée en ce que** l'une des fonctions de réseau SS7 relatives à l'ensemble de liens définit un ensemble de pseudo-liens sur lequel l'un des messages a été reçu.

5. Passerelle de signalisation (108) selon la revendication 4, convenant pour exécuter la fonction de filtrage de messages de réseau SS7 relative à un ensemble de liens, comprenant en outre les éléments suivants:
- pour le filtrage de messages du sous-système utilisateur, des moyens pour déterminer les paramètres de filtrage «Origination Point Code» OPC, «Destination Point Code» DPC, «Service Indicator» SI, «Network Indicator» NI ou «Signalling Link Selection» SLS à partir du paramètre «M3UA Protocol Data» d'un message M3UA et tous les autres paramètres de filtrage à partir du champ «User Protocol Data» du message M3UA;
- pour le filtrage de messages de gestion SS7, des moyens pour reconnaître les messages de gestion SS7 à l'aide de la classe de messages M3UA ainsi que des moyens pour déterminer les paramètres de filtrage «Origination Point Code» OPC ou «Destination Point Code» DPC à l'aide des données de l'ensemble de pseudo-liens déposées dans la base de données.

6. Passerelle de signalisation (108) selon la revendication 5, convenant pour exécuter la fonction de filtrage de messages de réseau SS7 relative à un ensemble de liens, **caractérisée par** des moyens permettant d'exécuter le filtrage des messages à l'aide de l'«Affected Point Code», ces moyens comprenant des moyens pour séparer un message M3UA qui contient plusieurs «Affected Point Codes» en messages M3UA distincts qui contiennent chacun uniquement les «Affected Point Codes» qui sont régis par une même règle de filtrage.
